# EUROPEAN PATENT SPECIFICATION

(11) **EP 4 310 840 B1**
(45) Date of publication and mention of the grant of the patent: **14.10.2026**
(21) Application number: 22770366.7
(22) Date of filing: 10.03.2022
(51) Int. Cl.: G10L 21/0208, G10L 21/0216, H04M 9/08

(54) **ECHO CANCELLATION METHOD AND APPARATUS, DEVICE, AND STORAGE MEDIUM**
ECHOUNTERDRÜCKUNGSVERFAHREN UND -VORRICHTUNG, VORRICHTUNG UND SPEICHERMEDIUM
PROCÉDÉ ET APPAREIL D'ANNULATION D'ÉCHO, DISPOSITIF ET SUPPORT DE STOCKAGE

(30) Priority: 17.03.2021 CN 202110284766
(43) Date of publication of application: 24.01.2024
(73) Proprietor: Vivo Mobile Communication Co., Ltd., Dongguan, Guangdong 523863 (CN)
(72) Inventor: NI, Zhong, Dongguan, Guangdong 523863 (CN); LIU, Liangbing, Dongguan, Guangdong 523863 (CN)
(74) Representative: Winter, Brandl - Partnerschaft mbB
(86) International application number: PCT/CN2022/080048
(87) International publication number: WO 2022/194011

(56) References cited:
- CN-A- 107 680 603
- CN-A- 111 031 448
- CN-A- 113 077 804
- JP-A- 2006 157 499
- JP-A- 2011 065 128
- US-A1- 2011 268 283
- TAKEDA R ET AL: "Automatic estimation of reverberation time with robot speech to improve ICA-based robot audition", HUMANOID ROBOTS, 2009. HUMANOIDS 2009. 9TH IEEE-RAS INTERNATIONAL CONFERENCE ON, IEEE, PISCATAWAY, NJ, USA, 7 December 2009 (2009-12-07), pages 250 - 255, XP031609251, ISBN: 978-1-4244-4597-4

## Description

### TECHNICAL FIELD

The present application belongs to the technical field of communication, and specifically relates to an echo cancellation method and apparatus, a device, and a storage medium.

### BACKGROUND

In the process of calls through electronic devices, echo signals are often generated due to the complexity of speech scenarios, such as the existence of reverberation, the existence of near-end noise, unstable system delays, and frame losses. The existence of the echo signals leads to poor call quality. In order to ensure the user call quality, at this stage, an echo in a speech signal is usually eliminated based on an echo transfer function.

Lengths of the echo transfer function in speech signals in different call scenarios may be different. Therefore, the existing echo cancellation solution may have high resource costs or poor echo cancellation effects. JP 2006 157499 A discloses a stable acoustic echo canceller, including a reverberation time estimation unit. Reverberation time is obtained by the reverberation time estimation unit. Based on the estimated reverberation time, filter length is set in consideration of the attenuation amount to be canceled by the acoustic echo canceller. "Automatic estimation of reverberation time with robot speech to improve ICA-based robot audition", TAKEDA R et al discloses an ICA-based robot audition system which estimates the reverberation time of the environment automatically by using the robot's own speech. The robot performs three steps: speaking a sentence in a new environment; calculating the relative powers of the echoes; and estimating the RT using linear regression of them. US 2011/268283 A1 discloses a reverberation suppressing apparatus and reverberation suppressing method. The method includes: acquiring a sound signal; computing reverberation data from the acquired sound signal; estimating reverberation characteristics based on the computed reverberation data; estimating a filter length of a filter which is used to suppress a reverberation based on the estimated reverberation characteristics; and suppressing the reverberation based on the estimated filter length. CN 107 680 603 A discloses a reverberation time estimation method and device. The method comprises: obtaining a current reverberation speech signal in a reverberation environment; determining an autocorrelation function based on a historical reverberation speech signal and the current reverberation speech signal; and determining reverberation time of the current reverberation speech signal based on the autocorrelation function and a preset maximum likelihood estimation model.

### SUMMARY

The purpose of the embodiments of the present application is to provide an echo cancellation method and apparatus, a device, and a storage medium, which can solve the technical problems of high resource costs or poor echo cancellation effects in existing echo cancellation solutions. The invention is defined in the claims.

According to a first aspect, the embodiment of the present application provides an echo cancellation method, which includes:
obtaining a plurality of reverberation features of a first target speech signal, where the plurality of reverberation features are a plurality of signal features related to reverberation times;
respectively determining, according to each reverberation feature of the first target speech signal and a preset mapping relationship between the reverberation feature and a reverberation time estimate, the reverberation time estimate corresponding to each reverberation feature of the first target speech signal; where the preset mapping relationship between each reverberation feature of the first target speech signal and the reverberation time estimate is a mapping relationship obtained based on a corresponding reverberation feature of a historical speech signal and a reverberation time corresponding to the reverberation feature; the preset mapping relationship between each reverberation feature and its corresponding reverberation time estimate is established based on linear regression method, with values of the reverberation feature as independent variable and values of the reverberation time estimate as dependent variable, and the preset mapping relationship is a slope of the reverberation feature and an intercept of the reverberation feature;
determining a global reverberation time of the first target speech signal by performing a fusion estimation on reverberation time estimates respectively corresponding to a plurality of reverberation features of the first target speech signal;
adjusting a length of an echo transfer function according to the global reverberation time; and
eliminating an echo of the first target speech signal according to the adjusted length of the echo transfer function.

According to a second aspect, an embodiment of the present application provides an echo cancellation apparatus, which includes:
an obtaining module, configured to obtain a plurality of reverberation features of a first target speech signal, where the plurality of reverberation features are a plurality of signal features related to reverberation times;
a first determination module, configured to respectively determine, according to each reverberation feature of the first target speech signal and a preset mapping relationship between the reverberation feature and a reverberation time estimate, the reverberation time estimate corresponding to each reverberation feature of the first target speech signal; where the preset mapping relationship between each reverberation feature of the first target speech signal and the reverberation time estimate is a mapping relationship obtained based on a corresponding reverberation feature of a historical speech signal and a reverberation time corresponding to the reverberation feature; the preset mapping relationship between each reverberation feature and its corresponding reverberation time estimate is established based on linear regression method, with values of the reverberation feature as independent variable and values of the reverberation time estimate as dependent variable, and the preset mapping relationship is a slope of the reverberation feature and an intercept of the reverberation feature;
a second determination module, configured to determine a global reverberation time of the first target speech signal by performing a fusion estimation on reverberation time estimates respectively corresponding to a plurality of reverberation features of the first target speech signal;
an adjustment module, configured to adjust a length of an echo transfer function according to the global reverberation time; and
an elimination module, configured to eliminate an echo of the first target speech signal according to the adjusted length of the echo transfer function.

According to a third aspect, an embodiment of this application provides an electronic device. The electronic device includes a processor, a memory, and a program or an instruction stored in the memory and capable of running on the processor. When the program or the instruction is executed by the processor, the steps of the method according to the first aspect are implemented.

According to a fourth aspect, an embodiment of this application provides a readable storage medium. The readable storage medium stores a program or an instruction, and when the program or the instruction is executed by a processor, steps of the method according to the first aspect are implemented.

According to a fifth aspect, an embodiment of this application provides a chip. The chip includes a processor and a communications interface, the communications interface is coupled to the processor, and the processor is configured to run a program or an instruction, to implement the method according to the first aspect.

In the embodiments of the present application, the global reverberation time is determined according to the reverberation time estimates corresponding to the plurality of reverberation features related to reverberation times in the first target speech signal, and the length of the echo transfer function is adjusted based on the global reverberation time, so as to eliminate the echo of the first target speech signal according to the adjusted length of the echo transfer function, and the reverberation time estimate corresponding to each reverberation feature is determined based on each reverberation feature and the preset mapping relationship between the reverberation feature and the reverberation time estimate. In this way, adjusting the length of the echo transfer function based on the global reverberation time of the first target speech signal can realize dynamic control of the length of the echo transfer function, so that the length of the echo transfer function can better meet actual needs. In this way, not only can the waste of resources caused by the long length of the echo transfer function be avoided, but also the poor effect of echo cancellation caused by the short length of the echo transfer function can be avoided, thereby better improving call quality and user experience.

### BRIEF DESCRIPTION OF DRAWINGS

FIG. 1 is a schematic flowchart of an echo cancellation method provided in an embodiment of the present application;
FIG. 2 is a schematic diagram of a correspondence between a real reverberation time and a reverberation time estimate obtained based on a preset mapping relationship provided by an embodiment of the present application;
FIG. 3 is a schematic flowchart of an echo cancellation method provided in an embodiment of the present application;
FIG. 4 is a schematic structural diagram of an echo cancellation apparatus provided by an embodiment of the present application; and
FIG. 5 is a schematic structural diagram of an electronic device provided by an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application.

The terms "first", "second", and the like in the description and the claims of this application are used to distinguish between similar objects, and do not need to be used to describe a specific order or sequence. It should be understood that, terms termed in such a way is interchangeable in proper circumstances, so that the embodiments of this application can be implemented in an order other than the order illustrated or described herein. In addition, in the specification and the claims, "and/or" represents at least one of connected objects, and a character "/" generally represents an "or" relationship between associated objects.

Based on the background technology, it can be seen that in the existing echo cancellation solution, lengths of the echo transfer function in speech signals in different call scenarios may be different, resulting in technical problems of high resource costs or poor echo cancellation effects.

Specifically, the core of the echo cancellation solution is to accurately estimate the echo transfer function of the speech signal, and eliminate the echo in the speech signal according to the length of the echo transfer function. However, in the current echo cancellation solution, the length of the echo transfer function (that is, a length of a filter) is usually predesigned, that is, the length of the echo transfer function in the existing echo cancellation solution is fixed. In this way, if the length of the echo transfer function is set too long, resources will be wasted, and if the length of the echo transfer function is set too short, the echo cancellation effect will be poor, resulting in that the existing echo cancellation method cannot respond well to changes in a speech scenario.

Based on the above findings, the present application provides an echo cancellation method and apparatus, a device, and a storage medium. In the present application, the global reverberation time is determined according to the reverberation time estimates corresponding to the plurality of reverberation features related to reverberation times in the first target speech signal, and the length of the echo transfer function is adjusted based on the global reverberation time, so as to eliminate the echo of the first target speech signal according to the adjusted length of the echo transfer function, and the reverberation time estimate corresponding to each reverberation feature is determined based on each reverberation feature and the preset mapping relationship between the reverberation feature and the reverberation time estimate. In this way, adjusting the length of the echo transfer function based on the global reverberation time of the first target speech signal can realize dynamic control of the length of the echo transfer function, so that the length of the echo transfer function can better meet actual needs. In this way, not only can the waste of resources caused by the long length of the echo transfer function be avoided, but also the poor effect of echo cancellation caused by the short length of the echo transfer function can be avoided, thereby better improving call quality and user experience.

The echo cancellation method provided by the embodiment of the present application will be described in detail below through specific embodiments and application scenarios with reference to the accompanying drawings.

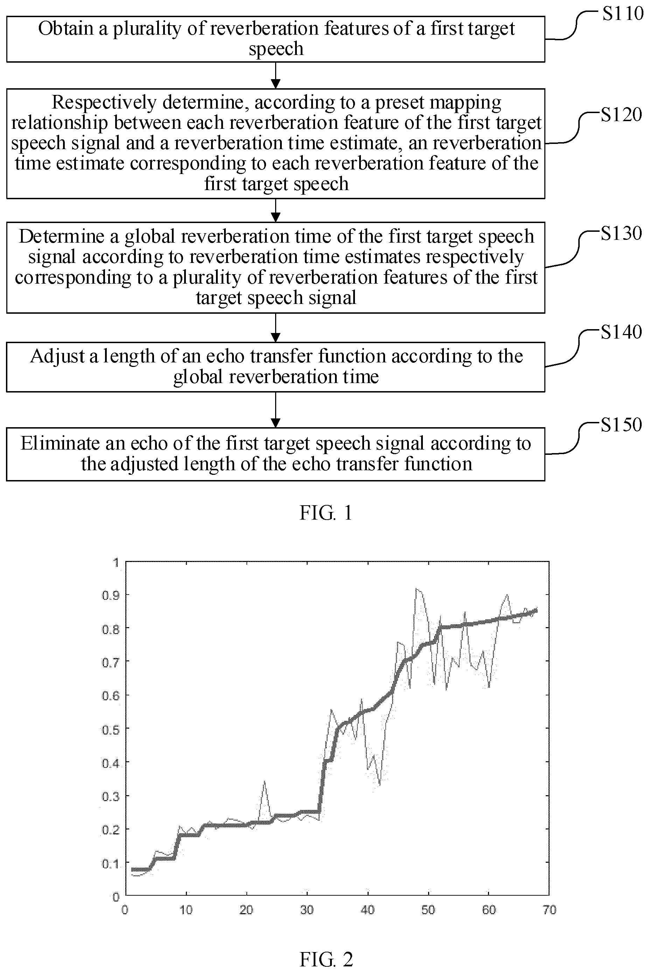

FIG. 1 is a schematic flowchart of an echo cancellation method provided in an embodiment of the present application. The method can be applied to electronic devices. As shown in FIG. 1, the echo cancellation method may include the following steps:
S110. Obtain a plurality of reverberation features of a first target speech signal.

The plurality of reverberation features may be a plurality of signal features related to reverberation times, and the signal feature may be used to represent the power attenuation and power slope of the speech signal.

As an example, when the user calls through the electronic device, the electronic device may receive a speech signal, that is, the first target speech signal. After receiving the first target speech signal, the electronic device may obtain a plurality of signal features related to reverberation times in the first target speech signal, that is, a plurality of reverberation features.

S120. Respectively determine, according to a preset mapping relationship between each reverberation feature of the first target speech signal and a reverberation time estimate, a reverberation time estimate corresponding to each reverberation feature of the first target speech signal.

The preset mapping relationship between each reverberation feature of the first target speech signal and the reverberation time estimate may be a mapping relationship obtained based on a corresponding reverberation feature of a historical speech signal and a reverberation time corresponding to the reverberation feature. There is a preset mapping relationship between each reverberation feature and the reverberation time corresponding to the reverberation feature. Assuming that the signal features include signal feature A, signal feature B, and signal feature C, the preset mapping relationship should also include a preset mapping relationship A between signal feature A and a reverberation time corresponding to signal feature A, a preset mapping relationship B between signal feature B and a reverberation time corresponding to signal feature B, and a preset mapping relationship C between signal feature C and a reverberation time corresponding to signal feature C. The preset mapping relationship can be pre-counted and pre-loaded in the electronic device, or can be loaded by the electronic device when determining the reverberation time estimate corresponding to each signal feature.

As an example, after obtaining a plurality of reverberation features of the first target speech signal, each reverberation feature and a preset mapping relationship between the reverberation feature and the reverberation time estimate may be obtained. According to each reverberation feature and the preset mapping relationship between the reverberation feature and the reverberation time estimate, the reverberation time estimate corresponding to each reverberation feature of the first target speech signal may be respectively determined, where each reverberation time estimate can be used to represent the reverberation times of different periods in the first target speech signal.

It can be understood that the historical speech signal and the first target speech signal may be speech signals received by the same electronic device or electronic device of the same model; the historical speech signal and the first target speech signal may be received when the electronic device is in the same call scenario; or the historical speech signal and the first target speech signal may also be received by the same electronic device or electronic device of the same model in the same call scenario. In this way, the preset mapping relationship obtained based on the corresponding reverberation feature of the historical speech signal and the reverberation time corresponding to the reverberation feature is corresponding to the first target speech signal. In this way, the accuracy of the reverberation time estimate corresponding to each reverberation feature of the first target speech signal that is determined based on each reverberation feature of the first target speech signal and the preset mapping relationship between the reverberation feature and the reverberation time estimate can be improved, improving the accuracy of the global reverberation time of the first target speech signal, which can further improve the call quality and user experience.

S130. Determine a global reverberation time of the first target speech signal according to reverberation time estimates respectively corresponding to a plurality of reverberation features of the first target speech signal.

As an example, after the reverberation time estimate corresponding to each reverberation feature of the first target speech signal is determined, the global reverberation time of the first target speech signal can be determined according to reverberation time estimates respectively corresponding to a plurality of reverberation features of the speech signal. In this way, since each reverberation time estimate can be used to represent the reverberation times of different periods in the first target speech signal, the global reverberation time of the first target speech signal determined based on the reverberation time estimates corresponding to different reverberation features is more consistent with the real reverberation time of the first target speech signal, and the accuracy of the global reverberation time of the first target speech signal is improved.

S140. Adjust a length of an echo transfer function according to the global reverberation time.

As an example, after the global reverberation time of the first target speech signal is determined, the length of the echo transfer function may be adjusted according to the global reverberation time to obtain an adjusted length of the echo transfer function. In this way, the adjusted length of the echo transfer function can be made more in line with the actual situation of the first target speech signal.

S150. Eliminate an echo of the first target speech signal according to the adjusted length of the echo transfer function.

As an example, after the length of the echo transfer function is adjusted according to the global reverberation time, echo cancellation may be performed on the first target speech signal according to the adjusted length of the echo transfer function, so as to cancel the echo of the first target speech signal. In this way, since the adjusted length of the echo transfer function is more in line with the actual situation of the first target speech signal, eliminating the echo of the first target speech signal based on the adjusted echo transfer function can make the echo cancellation effect better, and can also avoid the waste of resources caused by long cancellation setting of the echo transfer function.

In the embodiments of the present application, the global reverberation time is determined according to the reverberation time estimates corresponding to the plurality of reverberation features related to reverberation times in the first target speech signal, and the length of the echo transfer function is adjusted based on the global reverberation time, so as to eliminate the echo of the first target speech signal according to the adjusted length of the echo transfer function, and the reverberation time estimate corresponding to each reverberation feature is determined based on each reverberation feature and the preset mapping relationship between the reverberation feature and the reverberation time estimate. In this way, adjusting the length of the echo transfer function based on the global reverberation time of the first target speech signal can realize dynamic control of the length of the echo transfer function, so that the length of the echo transfer function can better meet actual needs. In this way, not only can the waste of resources caused by the long length of the echo transfer function be avoided, but also the poor effect of echo cancellation caused by the short length of the echo transfer function can be avoided, thereby better improving call quality and user experience.

In some embodiments, a plurality of reverberation features related to the reverberation times may be determined based on a logarithmic power spectral density of an echo path of the first target speech signal. Correspondingly, the specific implementation of the above step S110 may be as follows:
determining an echo path of the first target speech signal;
removing power with a value of zero among power of the echo path to obtain the logarithmic power spectral density of the echo path; and
obtaining a plurality of reverberation features based on logarithmic power in different frequency bands;
where the logarithmic power spectral density may include Q frequency bands, and Q is a positive integer.

As an example, when obtaining a plurality of reverberation features related to the reverberation times in the first target speech signal, the echo path of the first target speech signal can be determined first, for example, the echo path of the first target speech signal can be estimated by an adaptive filter. Then, the power of the echo path is analyzed to obtain a power spectral density corresponding to the echo path, power with a value of zero in the power spectral density is removed, to obtain the logarithmic power spectral density of the echo path, and the logarithmic power spectral density may be divided into Q frequency bands, where each frequency band may include a preset number of logarithmic powers, for example, the preset number may be a product of a preset duration (such as 30 ms) and a sampling frequency. Then, a plurality of reverberation features related to reverberation times in the first target speech signal may be obtained based on logarithmic powers in different frequency bands in the logarithmic power spectral density.

In this way, based on the power of different frequency bands in the Q frequency bands of the logarithmic power spectral density, the plurality of reverberation features can be obtained, so that the obtained plurality of reverberation features can better represent power characteristics of different frequency bands of the first target speech signal, which can provide a more accurate data basis for the determination of the global reverberation time, and can further make the length of the echo transfer function more in line with actual needs and improve call quality and user experience.

In some embodiments, the plurality of reverberation features related to the reverberation times in the first target speech signal may include a first power attenuation value, a second power attenuation value, and a mean power fitting slope.

The first power attenuation value is a power attenuation value of the first N frequency bands in the Q frequency bands; the second power attenuation value is the power attenuation value of the L frequency bands after the (N-1)^{th} frequency band in the Q frequency bands; and the mean power fitting slope is obtained through fitting based on the mean logarithmic power spectral density of the logarithmic power spectral density.

Correspondingly, at this time, the specific implementation of obtaining a plurality of reverberation features based on the logarithmic power in different frequency bands can be as follows:
calculating at least one first difference frequency of every two adjacent frequency bands of the first N frequency bands of the Q frequency bands;
determining a first power attenuation value according to the first difference frequency;
calculating at least one second difference frequency of every two adjacent frequency bands of L frequency bands of the Q frequency bands;
determining a second power attenuation value according to the second difference frequency;
processing the logarithmic power spectral density by an FIR filter to obtain a mean logarithmic power spectral density of the logarithmic power spectral density;
selecting a continuous power frequency band within a preset interval range in the mean logarithmic power spectral density; and
obtaining a mean power fitting slope through fitting according to the continuous power frequency band.

N is a positive integer and N<Q. The L frequency bands are L frequency bands after the (N-1)^{th} frequency band of the Q frequency bands, and L is a positive integer.

As an example, when determining the first power attenuation value, at least one difference frequency of every two adjacent frequency bands of the first N frequency bands of the Q frequency bands of the logarithmic power spectral density can be calculated, that is, at least one first difference frequency. Then, the power attenuation value can be determined according to the first difference frequency, that is, the first power attenuation value. Since the first power attenuation value is determined based on the first N frequency bands of the Q frequency bands, the first power attenuation value may represent the power attenuation of the first N frequency bands of the logarithmic power spectral density, and the first power attenuation value may also be referred to as a header power attenuation value. Taking N as 2 as an example, the first frequency band of the Q frequency bands can be compared with the second frequency band of the Q frequency bands, to obtain the difference frequency between the first frequency band and the second frequency band, that is, the first difference frequency, and then the mean value of the first difference frequency is used as the first power attenuation value.

When determining the second power attenuation value, at least one difference between every two adjacent frequency bands of the L frequency bands after the (N-1)^{th} frequency band of the Q frequency bands of the logarithmic power spectral density can be calculated, that is, at least one second difference frequency. Then, the power attenuation value can be determined according to the second difference frequency, that is, the second power attenuation value. Since the second power attenuation value is determined based on the L frequency bands after the (N-1)^{th} frequency band of the Q frequency bands, the second power attenuation value may represent the power attenuation of the middle L frequency bands of the logarithmic power spectral density, and the second power attenuation value may also be referred to as a middle power attenuation value. For example, taking N as 2 and L as 2 as an example, the first frequency band of the Q frequency bands can be compared with the second frequency band of the Q frequency bands, to obtain the first difference frequency, the mean value of the first difference frequency is used as the first power attenuation value, the second frequency band is compared with the third frequency band, to obtain the second difference frequency, and the mean value of the second difference frequency is used as the second power attenuation value.

When determining the mean power fitting slope, the logarithmic power spectral density can be calculated and input to the FIR (Finite Impulse Response) filter, to obtain the mean logarithmic power spectral density, where the FIR filter is a mean FIR filter, and the length of the FIR filter can be set to around 40. Then, a continuous power frequency band within a preset interval range in the mean logarithmic power spectral density may be selected; and for example, the preset interval range can be (-76, -30). Afterwards, a linear-logarithmic power spectral density can be constructed based on the continuous power frequency band, and then a linear fitting is performed on the linear-logarithmic power spectral density to obtain a fitting slope, that is, a mean power fitting slope.

In this way, determining the first power attenuation value, the second power attenuation value, and the mean power fitting slope based on different frequency bands of the Q frequency bands of the logarithmic power spectral density can make the acquired reverberation features more accurately represent the power features of different frequency bands of the first target speech signal, and provide a more accurate data basis for determining the global reverberation time, which can further make the length of the echo transfer function more in line with actual needs and improve call quality and user experience.

In some embodiments, the specific implementation method of the above step S120 may be as follows:
determining a first reverberation time estimate corresponding to the first power attenuation value according to a first preset mapping relationship corresponding to the first power attenuation value;
determining a second reverberation time estimate corresponding to the second power attenuation value according to a second preset mapping relationship corresponding to the second power attenuation value; and
determining, according to a third preset mapping relationship corresponding to the mean power fitting slope, a third reverberation time estimate corresponding to the mean power fitting slope.

The first reverberation time estimate is a reverberation time estimate determined according to the first power attenuation value and the preset mapping relationship between the first power attenuation value and the reverberation time estimate; the second reverberation time estimate is a reverberation time estimate determined according to the second power attenuation value and the preset mapping relationship between the second power attenuation value and the reverberation time estimate; the third reverberation time estimate is a reverberation time estimate determined according to the mean power fitting slope and the preset mapping relationship between the mean power fitting slope and the reverberation time estimate.

As an example, when determining the reverberation time estimate corresponding to each reverberation feature, the preset mapping relationship corresponding to each reverberation feature can be determined first, that is, the preset mapping relationship between the first power attenuation value and the reverberation time estimate can be determined, that is, the first preset mapping relationship; the preset mapping relationship between the second power attenuation value and the reverberation time estimate can be determined, that is, the second preset mapping relationship; the preset mapping relationship between the mean power fitting slope and the reverberation time estimate can be determined, that is, the third preset mapping relationship; Then, the reverberation time estimate corresponding to the first power attenuation value is determined according to the first power attenuation value and the first preset mapping relationship, that is, the first reverberation time estimate; the reverberation time estimate corresponding to the second power attenuation value is determined according to the second power attenuation value and the second preset mapping relationship, that is, the second reverberation time estimate; and the reverberation time estimate corresponding to the mean power fitting slope is determined according to the mean power fitting slope and the third preset mapping relationship, that is, the third reverberation time estimate.

As a specific example, each of the preset mapping relationships (that is, the first preset mapping relationship, the second preset mapping relationship, and the third preset mapping relationship) may be a statistical preset mapping relationship established based on the strong correlation relationship between each reverberation feature and the reverberation time by using a linear statistical model. Specifically, the way to establish the preset mapping relationship may be as follows:

First, various historical speech signals and reverberation times of measured venues corresponding to the historical speech signals are obtained to form a measured sample library, where the measured sample library may include samples of various reverberation times. In addition, a certain number of measured samples (such as 68, 70, etc.) can be selected in the measured sample library to form a training sample library, and the measured samples in the measured sample library other than the training sample library can be used to form a test sample library.

Then, the preset mapping relationship between different reverberation features and reverberation times can be determined through a statistical model. Details are as follows:

Samples of the reverberation time smaller than or equal to the first preset threshold (for example, smaller than or equal to 250ms) and their corresponding reverberation features are selected from the training sample library, the first power attenuation values of these samples are calculated, and the linear regression method is used to establish a first preset mapping relationship between the first power attenuation value and the reverberation time, and the preset mapping relationship may be a parameter of the mapping relationship between the first power attenuation value and the reverberation time, such as the first attenuation slope and a first attenuation intercept.

Samples of the reverberation time greater than or equal to the second preset threshold (for example, greater than or equal to 500ms) and their corresponding reverberation features are selected from the training sample library, the second power attenuation values of these samples are calculated, and the linear regression method is used to establish a second preset mapping relationship between the second power attenuation value and the reverberation time, and the preset mapping relationship may be a parameter of the mapping relationship between the second power attenuation value and the reverberation time, such as a second attenuation slope and a second attenuation intercept.

Samples of the reverberation time greater than or equal to the second preset threshold (for example, greater than or equal to 500ms) and their corresponding reverberation features are selected from the training sample library, the mean power fitting slope of these samples are calculated, and the linear regression method is used to establish a third preset mapping relationship between the mean power fitting slope and the reverberation time, and the preset mapping relationship may be a parameter of the mapping relationship between the mean power fitting slope and the reverberation time, such as a mean attenuation slope and a mean attenuation intercept.

Afterwards, the first preset mapping relationship between the first power attenuation value and the reverberation time, the second preset mapping relationship between the second power attenuation value and the reverberation time, and the third preset mapping relationship between the mean power fitting slope and the reverberation time can be verified to ensure the accuracy of each preset mapping relationship. Referring to FIG. 2, FIG. 2 shows a correspondence between a real reverberation time and a reverberation time estimate based on a preset mapping relationship. In FIG. 2, the thick solid line represents the real reverberation time, and the thin solid line represents the reverberation time estimate based on the preset mapping relationship. In FIG. 2, the vertical axis represents the reverberation time (unit: second), and the horizontal axis represents the sample number. The correspondence between the real reverberation time and the reverberation time estimate can be clearly understood in combination with FIG. 2.

In this way, based on different preset mapping relationships between different reverberation features and reverberation times, the reverberation time estimates corresponding to different reverberation features are determined, which can improve the accuracy of the determined reverberation time estimates corresponding to different reverberation features, which can further improve the call quality.

In some embodiments, the specific implementation manner of the above step S130 may be as follows:
in a case that the first reverberation time estimate is smaller than or equal to a first preset threshold, determining the first reverberation time estimate as the global reverberation time;
in a case that the second reverberation time estimate and the third reverberation time estimate are both larger than or equal to the second preset threshold, determining the second reverberation time estimate as the global reverberation; and
in a case that the first reverberation time estimate is greater than the first preset threshold and at least one of the second reverberation time estimate and the third reverberation time estimate is smaller than the second preset threshold, determining a mean value of the second reverberation time estimate and the third reverberation time estimate as the global reverberation time.

As an example, when determining the global reverberation time of the first target speech signal according to each reverberation time estimate, it may first be determined whether the first reverberation time estimate is smaller than or equal to a first preset threshold, for example, the first preset threshold may be 250ms. In a case that the first reverberation time estimate is smaller than or equal to the first preset threshold, the first reverberation time estimate is determined as the global reverberation time.

If the first reverberation time estimate is greater than the first preset threshold, it may be determined whether the second reverberation time estimate and the third reverberation time estimate are both greater than or equal to the second preset threshold, for example, the first preset threshold can be 500ms. In a case that the second reverberation time estimate and the third reverberation time estimate are both larger than or equal to the second preset threshold, the second reverberation time estimate may be determined as the global reverberation.

Otherwise, in a case that the first reverberation time estimate is greater than the first preset threshold and at least one of the second reverberation time estimate and the third reverberation time estimate is smaller than the second preset threshold, a mean value of the second reverberation time estimate and the third reverberation time estimate may be determined as the global reverberation time.

In this way, according to the specific numerical values of the first reverberation time estimate, the second reverberation time estimate, and the third reverberation time estimate, the global reverberation time of the first target speech signal can be determined, which can further improve the accuracy of the global reverberation time. Therefore, the accuracy of the adjusted length of the echo transfer function can be further improved, and the call quality can be improved.

In some embodiments, considering that although most of the echo of the near-end signal is canceled after echo cancellation once, because the filter corresponding to the echo transfer function has an offset, there is a small part of echo in the output signal. Therefore, echo cancellation may be performed for the second time to cancel the echo. Correspondingly, the length of the echo transfer function may include a first length of the echo transfer function and a second length of the echo transfer function. The specific implementation of the above step S150 can be as follows:
eliminating the echo of the first target speech signal according to the adjusted first length of the echo transfer function, to obtain a second target speech signal; and
eliminating an echo of the second target speech signal according to the adjusted second length of the echo transfer function.

The first length of the echo transfer function may be the length of the echo transfer function for performing the first echo cancellation on the first target speech signal, for example, the first length of the echo transfer function may be the length of the adaptive filter.

The second length of the echo transfer function may be the length of the echo transfer function for performing the second echo cancellation on the first target speech signal, for example, the second length of the echo transfer function may be the length of the filter for remaining echo cancellation.

As an example, the second echo cancellation may be performed on the first target speech signal to ensure an echo cancellation effect. Specifically, the echo of the first target speech signal may be eliminated first according to the adjusted first length of the echo transfer function, to obtain the speech signal after the first echo cancellation, that is, the second target speech signal. Then, echo cancellation is performed on the second target speech signal again according to the adjusted second length of the echo transfer function. For example, echo cancellation can be performed on the first target speech signal through the adjusted length of the adaptive filter, to obtain the second target speech signal, and then echo cancellation can be performed on the second target speech signal through the adjusted length of the filter for remaining echo cancellation.

In this way, on the one hand, using two echo transfer function lengths to perform echo cancellation on the first target speech signal can further improve the echo cancellation effect. On the other hand, since the two lengths of the echo transfer function are adjusted according to the global reverberation time, the adjusted two lengths of the echo transfer function are more in line with the actual situation of the first target speech signal, realizing dynamic adjustment of the lengths of two filters and further improving the echo cancellation effect.

It should be noted that, the echo cancellation method provided in the embodiment of the present application may be executed by an echo cancellation apparatus or, or a control module in the echo cancellation apparatus for executing the echo cancellation method. In the embodiment of the present application, the echo cancellation method provided by the embodiment of the present application is described by taking the echo cancellation method performed by the echo cancellation apparatus as an example.

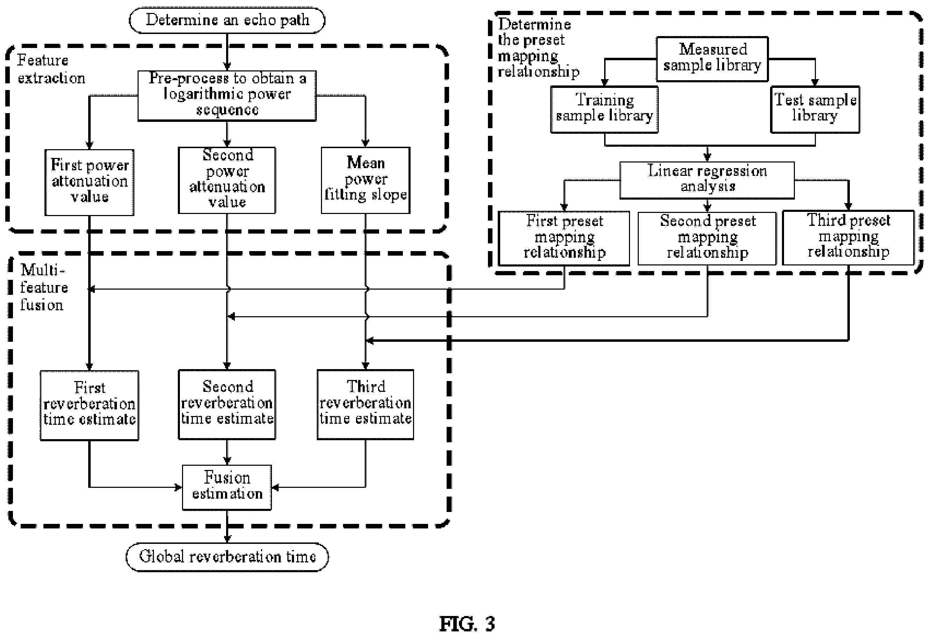

In order to make the echo cancellation method provided in the embodiment of the present application clearer, the echo cancellation method provided in the embodiment of the present application will be described below with reference to FIG. 3. As shown in FIG. 3, the echo cancellation method may include:
determining an echo path of the first target speech signal, performing feature extraction, determining a preset mapping relationship, and performing multi-feature fusion.

The feature extraction may include: performing preprocessing on the echo path to obtain a logarithmic power spectral density of the echo path. Then, feature extraction is performed based on the logarithmic power spectral density to obtain the first power attenuation value, the second power attenuation value and the mean power fitting slope related to the reverberation time in the first target speech signal.

Determining the preset mapping relationship may include: performing training based on the training sample library and the test sample library in the measured sample library through a statistical model, to determine the first preset mapping relationship, the second preset mapping relationship, and the third preset mapping relationship.

The multi-feature fusion may include: determining, according to the first preset mapping relationship corresponding to the first power attenuation value, the first reverberation time estimate corresponding to the first power attenuation value; determining, according to the second preset mapping relationship corresponding to the second power attenuation value, the second reverberation time estimate corresponding to the second power attenuation value; and determining, according to the third preset mapping relationship corresponding to the mean power fitting slope, the third reverberation time estimate corresponding to the mean power fitting slope. Afterwards, fusion estimation is performed on the first reverberation time estimate, the second reverberation time estimate, and the third reverberation time estimate to obtain the global reverberation time of the first target speech signal.

For the sake of brevity, the specific implementation principles and technical effects of the above-mentioned steps and the types of the above-mentioned method embodiments will not be repeated here.

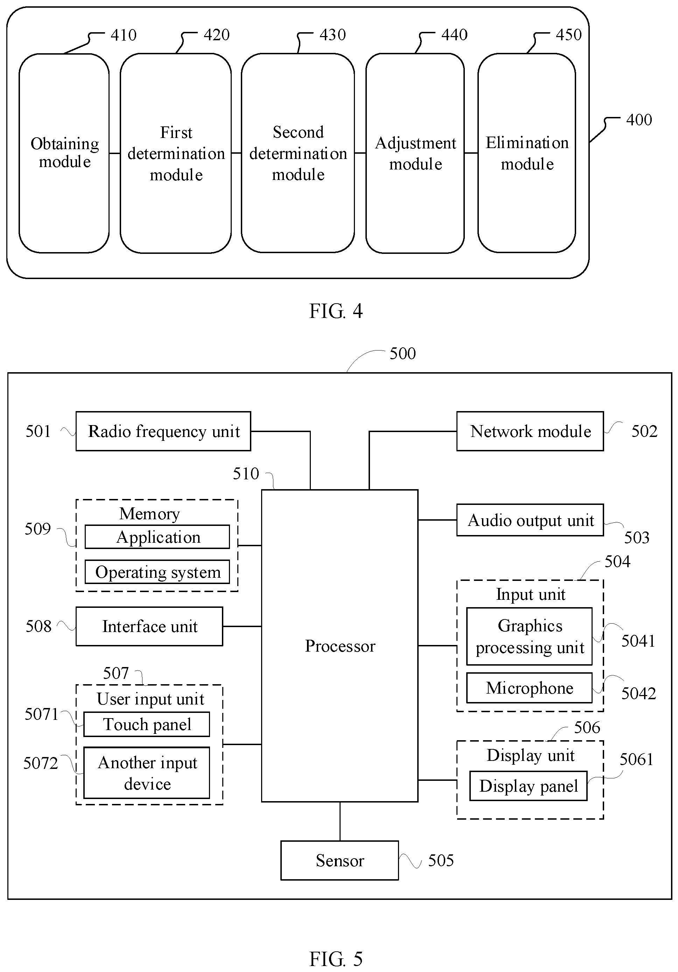

Based on the same inventive concept, the embodiment of the present application also provides an echo cancellation apparatus, and as shown in FIG. 4, the echo cancellation apparatus 400 may include:
an obtaining module 410, configured to obtain a plurality of reverberation features of a first target speech signal, where the plurality of reverberation features are a plurality of signal features related to reverberation times;
a first determination module 420, configured to respectively determine, according to each reverberation feature of the first target speech signal and a preset mapping relationship between the reverberation feature and a reverberation time estimate, the reverberation time estimate corresponding to each reverberation feature of the first target speech signal; where the preset mapping relationship between each reverberation feature of the first target speech signal and the reverberation time estimate is a mapping relationship obtained based on a corresponding reverberation feature of a historical speech signal and a reverberation time corresponding to the reverberation feature;
a second determination module 430, configured to determine a global reverberation time of the first target speech signal according to reverberation time estimates respectively corresponding to a plurality of reverberation features of the first target speech signal;
an adjustment module 440, configured to adjust a length of an echo transfer function according to the global reverberation time; and
an elimination module 450, configured to eliminate an echo of the first target speech signal according to the adjusted length of the echo transfer function.

In the embodiments of the present application, the global reverberation time is determined according to the reverberation time estimates corresponding to the plurality of reverberation features related to reverberation times in the first target speech signal, and the length of the echo transfer function is adjusted based on the global reverberation time, so as to eliminate the echo of the first target speech signal according to the adjusted length of the echo transfer function, and the reverberation time estimate corresponding to each reverberation feature is determined based on each reverberation feature and the preset mapping relationship between the reverberation feature and the reverberation time estimate. In this way, adjusting the length of the echo transfer function based on the global reverberation time of the first target speech signal can realize dynamic control of the length of the echo transfer function, so that the length of the echo transfer function can better meet actual needs. In this way, not only can the waste of resources caused by the long length of the echo transfer function be avoided, but also the poor effect of echo cancellation caused by the short length of the echo transfer function can be avoided, thereby better improving call quality and user experience.

In some embodiments, the obtaining module 410 may include:
a first determination unit, configured to determine an echo path of the first target speech signal;
a processing unit, configured to remove power with a value of zero among power of the echo path to obtain the logarithmic power spectral density of the echo path; where the logarithmic power spectral density includes Q frequency bands, and Q is a positive integer; and
an obtaining unit, configured to obtain a plurality of reverberation features based on logarithmic power in different frequency bands. In this way, based on the power of different frequency bands in the Q frequency bands of the logarithmic power spectral density, the plurality of reverberation features can be obtained, so that the obtained plurality of reverberation features can better represent power characteristics of different frequency bands of the first target speech signal, which can provide a more accurate data basis for the determination of the global reverberation time, and can further make the length of the echo transfer function more in line with actual needs and improve call quality and user experience.

In some embodiments, the plurality of signal features may include a first power attenuation value, a second power attenuation value, and a mean power fitting slope.

The first power attenuation value is a power attenuation value of the first N frequency bands in the Q frequency bands; the second power attenuation value is the power attenuation value of the L frequency bands after the (N-1)^{th} frequency band in the Q frequency bands; and the mean power fitting slope is obtained through fitting based on the mean logarithmic power spectral density of the logarithmic power spectral density.

In some embodiments, the obtaining unit may include:
a first calculation subunit, configured to calculate at least one first difference frequency of every two adjacent frequency bands of the first N frequency bands of the Q frequency bands; where N is a positive integer and N<Q;
a first determination subunit, configured to determine a first power attenuation value according to the first difference frequency;
a second calculation subunit, configured to calculate at least one second difference frequency of every two adjacent frequency bands of L frequency bands of the Q frequency bands; where the L frequency bands are L frequency bands after the (N-1)^{th} frequency band of the Q frequency bands, and L is a positive integer;
a second determination subunit, configured to determine a second power attenuation value according to the second difference frequency;
a processing subunit, configured to process the logarithmic power spectral density by an FIR filter to obtain a mean logarithmic power spectral density of the logarithmic power spectral density;
a selection subunit, configured to select a continuous power frequency band within a preset interval range in the mean logarithmic power spectral density; and
a fitting subunit, configured to obtain a mean power fitting slope through fitting according to the continuous power frequency band.

In this way, determining the first power attenuation value, the second power attenuation value, and the mean power fitting slope based on different frequency bands of the Q frequency bands of the logarithmic power spectral density can make the acquired reverberation features more accurately represent the power features of different frequency bands of the first target speech signal, and provide a more accurate data basis for determining the global reverberation time, which can further make the length of the echo transfer function more in line with actual needs and improve call quality and user experience.

In some embodiments, the second determining module 430 may include:
a second determination unit, configured to: in a case that the first reverberation time estimate is smaller than or equal to a first preset threshold, determine the first reverberation time estimate as the global reverberation time; where the first reverberation time estimate is a reverberation time estimate determined according to the first power attenuation value and the preset mapping relationship between the first power attenuation value and the reverberation time estimate;
a third determination unit, configured to: in a case that both the second reverberation time estimate and the third reverberation time estimate are greater than or equal to a second preset threshold, determine the second reverberation time estimate as the global reverberation time; where the second reverberation time estimate is a reverberation time estimate determined according to the second power attenuation value and the preset mapping relationship between the second power attenuation value and the reverberation time estimate; and the third reverberation time estimate is a reverberation time estimate determined according to the mean power fitting slope and the preset mapping relationship between the mean power fitting slope and the reverberation time estimate; and
a fourth determination unit, configured to: in a case that the first reverberation time estimate is greater than the first preset threshold and at least one of the second reverberation time estimate and the third reverberation time estimate is smaller than the second preset threshold, determine a mean value of the second reverberation time estimate and the third reverberation time estimate as the global reverberation time.

In this way, according to the specific numerical values of the first reverberation time estimate, the second reverberation time estimate, and the third reverberation time estimate, the global reverberation time of the first target speech signal can be determined, which can further improve the accuracy of the global reverberation time. Therefore, the accuracy of the adjusted length of the echo transfer function can be further improved, and the call quality can be improved.

In some embodiments, the length of the echo transfer function may include a first length of the echo transfer function and a second length of the echo transfer function; and

The elimination module 450 may include:
a first elimination unit, configured to eliminate the echo of the first target speech signal according to the adjusted first length of the echo transfer function, to obtain a second target speech signal; and
a second elimination unit, configured to eliminate an echo of the second target speech signal according to the adjusted second length of the echo transfer function.

In this way, on the one hand, using two echo transfer function lengths to perform echo cancellation on the first target speech signal can further improve the echo cancellation effect. On the other hand, since the two lengths of the echo transfer function are adjusted according to the global reverberation time, the adjusted two lengths of the echo transfer function are more in line with the actual situation of the first target speech signal, realizing dynamic adjustment of the lengths of two filters and further improving the echo cancellation effect.

The echo cancellation apparatus in the embodiments of the present application may be an apparatus, or may be a component, an integrated circuit, or a chip in a terminal. The apparatus may be a mobile electronic device, or may be a non-mobile electronic device. For example, the mobile electronic device may be a mobile phone, a tablet computer, a notebook computer, a palmtop computer, a vehicle-mounted electronic device, a wearable device, an ultra-mobile personal computer (ultra-mobile personal computer, UMPC), a netbook, a personal digital assistant (personal digital assistant, PDA), or the like. The non-mobile electronic device may be a server, a network attached storage (Network Attached Storage, NAS), a personal computer (personal computer, PC), a television (television, TV), a teller machine, a self-service machine, or the like. This is not specifically limited in the embodiments of this application.

The echo cancellation apparatus in this embodiment of the present application may be a device with an operating system. The operating system may be an Android (Android) operating system, may be an iOS operating system, or may be another possible operating system. This is not specifically limited in this embodiment of this application.

The echo cancellation apparatus provided in this embodiment of the present application can implement processes implemented by the echo cancellation apparatus in the method embodiments of FIG. 1 to FIG. 3. To avoid repetition, details are not described herein again.

Based on the same inventive concept, the embodiment of the present application also provides an electronic device. As shown in FIG. 5, the electronic device 500 may include a processor 510, a memory 509, and a program or an instruction stored in the memory 509 and executable on the processor 510, and the program or the instruction, when executed by the processor 510, implements the various processes of the embodiment of the echo cancellation method described above, and can achieve the same technical effect. To avoid repetition, details are not repeated herein.

It should be noted that the electronic device in this embodiment of this application includes the foregoing mobile electronic device and the foregoing non-mobile electronic device.

The electronic device 500 includes but is not limited to components such as a radio frequency unit 501, a network module 502, an audio output unit 503, an input unit 504, a sensor 505, a display unit 506, a user input unit 507, an interface unit 508, a memory 509, and a processor 510.

It may be understood by a person skilled in the art that the electronic device 500 may further include a power supply (such as a battery) that supplies power to each component. The power supply may be logically connected to the processor 510 by using a power management system, to implement functions such as charging, discharging, and power consumption management by using the power management system. A structure of the electronic device shown in FIG. 5 does not constitute a limitation on the electronic device, and may include more or fewer components than those shown in the figure, or combine some components, or have different part arrangements. Details are not described herein again.

The processor 510 is configured to:
obtain a plurality of reverberation features of a first target speech;
respectively determine, according to a preset mapping relationship between each reverberation feature of the first target speech signal and a reverberation time estimate, a reverberation time estimate corresponding to each reverberation feature of the first target speech;
determine a global reverberation time of the first target speech signal according to reverberation time estimates respectively corresponding to a plurality of reverberation features of the first target speech signal;
adjust a length of an echo transfer function according to the global reverberation time; and
eliminate an echo of the first target speech signal according to the adjusted length of the echo transfer function.

In the embodiments of the present application, the global reverberation time is determined according to the reverberation time estimates corresponding to the plurality of reverberation features related to reverberation times in the first target speech signal, and the length of the echo transfer function is adjusted based on the global reverberation time, so as to eliminate the echo of the first target speech signal according to the adjusted length of the echo transfer function, and the reverberation time estimate corresponding to each reverberation feature is determined based on each reverberation feature and the preset mapping relationship between the reverberation feature and the reverberation time estimate. In this way, adjusting the length of the echo transfer function based on the global reverberation time of the first target speech signal can realize dynamic control of the length of the echo transfer function, so that the length of the echo transfer function can better meet actual needs. In this way, not only can the waste of resources caused by the long length of the echo transfer function be avoided, but also the poor effect of echo cancellation caused by the short length of the echo transfer function can be avoided, thereby better improving call quality and user experience.

Optionally, the processor 510 is further configured to:
determine an echo path of the first target speech signal;
remove power with a value of zero among power of the echo path to obtain the logarithmic power spectral density of the echo path; and
obtain a plurality of reverberation features based on logarithmic power in different frequency bands.

In this way, based on the power of different frequency bands in the Q frequency bands of the logarithmic power spectral density, the plurality of reverberation features can be obtained, so that the obtained plurality of reverberation features can better represent power characteristics of different frequency bands of the first target speech signal, which can provide a more accurate data basis for the determination of the global reverberation time, and can further make the length of the echo transfer function more in line with actual needs and improve call quality and user experience.

Optionally, the processor 510 is further configured to:
calculate at least one first difference frequency of every two adjacent frequency bands of the first N frequency bands of the Q frequency bands;
determine a first power attenuation value according to the first difference frequency;
calculate at least one second difference frequency of every two adjacent frequency bands of L frequency bands of the Q frequency bands;
determine a second power attenuation value according to the second difference frequency;
process the logarithmic power spectral density by an FIR filter to obtain a mean logarithmic power spectral density of the logarithmic power spectral density;
select a continuous power frequency band within a preset interval range in the mean logarithmic power spectral density; and
obtain a mean power fitting slope through fitting according to the continuous power frequency band.

In this way, determining the first power attenuation value, the second power attenuation value, and the mean power fitting slope based on different frequency bands of the Q frequency bands of the logarithmic power spectral density can make the acquired reverberation features more accurately represent the power features of different frequency bands of the first target speech signal, and provide a more accurate data basis for determining the global reverberation time, which can further make the length of the echo transfer function more in line with actual needs and improve call quality and user experience.

Optionally, the processor 510 is further configured to:
in a case that the first reverberation time estimate is smaller than or equal to a first preset threshold, determine the first reverberation time estimate as the global reverberation time;
in a case that the second reverberation time estimate and the third reverberation time estimate are both larger than or equal to the second preset threshold, determine the second reverberation time estimate as the global reverberation; and
in a case that the first reverberation time estimate is greater than the first preset threshold and at least one of the second reverberation time estimate and the third reverberation time estimate is smaller than the second preset threshold, determine a mean value of the second reverberation time estimate and the third reverberation time estimate as the global reverberation time.

In this way, according to the specific numerical values of the first reverberation time estimate, the second reverberation time estimate, and the third reverberation time estimate, the global reverberation time of the speech signal can be determined, which can further improve the accuracy of the global reverberation time. Therefore, the accuracy of the adjusted length of the echo transfer function can be further improved, and the call quality can be improved.

Optionally, the processor 510 is further configured to:
eliminate the echo of the first target speech signal according to the adjusted first length of the echo transfer function, to obtain a second target speech signal; and
eliminate an echo of the second target speech signal according to the adjusted second length of the echo transfer function.

In this way, on the one hand, using two echo transfer function lengths to perform echo cancellation on the first target speech signal can further improve the echo cancellation effect. On the other hand, since the two lengths of the echo transfer function are adjusted according to the global reverberation time, the adjusted two lengths of the echo transfer function are more in line with the actual situation of the first target speech signal, realizing dynamic adjustment of the lengths of two filters and further improving the echo cancellation effect.

An embodiment of the present application further provides a readable storage medium. The readable storage medium stores a program or an instruction, and when the program or the instruction is executed by a processor, the various processes of the foregoing echo cancellation method embodiment is performed and the same technical effects can be achieved. To avoid repetition, details are not described herein again.

The processor is a processor in the electronic device in the foregoing embodiment. Specifically, the processor may include a central processing unit (CPU), or an applicationspecific integrated circuit (Application Specific Integrated Circuit, ASIC), or may be one or more integrated circuits configured to implement the embodiments of the present application. The readable storage medium includes a computer-readable storage medium, such as a computer read-only memory (Read-Only Memory, ROM), a random access memory (Random Access Memory, RAM), a magnetic disk, or an optical disc.

An embodiment of the present application further provides a chip, the chip includes a processor and a communication interface, the communication interface is coupled to the processor, and the processor is configured to run programs or instructions to implement each process of the embodiment of the foregoing echo cancellation method and the same technical effects can be achieved. To avoid repetition, details are not described herein again.

It should be understood that the chip mentioned in this embodiment of this application may also be referred to as a system-level chip, a system chip, a system on chip, a system chip on chip, and the like.

It should be noted that in this specification, the term "include", "comprise", or any other variant is intended to cover non-exclusive inclusion, so that a process, method, article, or apparatus that includes a series of elements includes not only those elements but also other elements that are not explicitly listed, or includes elements inherent to such a process, method, article, or apparatus. An element limited by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed frequency band, and may further include performing functions in a basically simultaneous manner or in a reverse frequency band according to the functions concerned. For example, the described method may be performed in an order different from that described, and the steps may be added, omitted, or combined. In addition, features described with reference to some examples may be combined in other examples.

Aspects of this application are described with reference to a flowchart and/or a block diagram of a method, an apparatus (system), and a computer program product according to embodiments of this application. It should be understood that each block in the flowchart and/or block diagram and a combination of blocks in the flowchart and/or block diagram may be implemented by a computer program instruction. These computer program instructions may be provided for a general-purpose computer, a dedicated computer, or a processor of another programmable data processing apparatus to generate a machine, so that when these instructions are executed by the computer or the processor of the another programmable data processing apparatus, specific functions/actions in one or more blocks in the flowcharts and/or in the block diagrams are implemented. The processor may be but is not limited to a general purpose processor, a dedicated processor, a special application processor, or a field programmable logic circuit. It may be further understood that each block in the block diagram and/or flowchart and a combination of blocks in the block diagram and/or flowchart may be implemented by dedicated hardware that performs a specified function or action, or may be implemented by a combination of dedicated hardware and a computer instruction.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as a ROM/RAM, a magnetic disk, or an optical disc) and includes several instructions for instructing a terminal (which may be a mobile phone, a computer, a server, or a network device) to execute the methods described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the scope of the appended claims.

## Claims

1. An echo cancellation method, comprising:
obtaining (S110) a plurality of reverberation features of a first target speech signal, wherein the plurality of reverberation features are a plurality of signal features related to reverberation times;
respectively determining (S120) , according to each reverberation feature of the first target speech signal and a preset mapping relationship between the reverberation feature and a reverberation time estimate, the reverberation time estimate corresponding to each reverberation feature of the first target speech signal; wherein the preset mapping relationship between each reverberation feature of the first target speech signal and the reverberation time estimate is a mapping relationship obtained based on a corresponding reverberation feature of a historical speech signal and a reverberation time corresponding to the reverberation feature; the preset mapping relationship between each reverberation feature and its corresponding reverberation time estimate is established based on linear regression method, with values of the reverberation feature as independent variable and values of the reverberation time estimate as dependent variable, and the preset mapping relationship is a slope of the reverberation feature and an intercept of the reverberation feature;
determining (S130) a global reverberation time of the first target speech signal by performing a fusion estimation on reverberation time estimates respectively corresponding to a plurality of reverberation features of the first target speech signal;
adjusting (S140) a length of an echo transfer function according to the global reverberation time; and
eliminating (S150) an echo of the first target speech signal according to the adjusted length of the echo transfer function.

2. The method according to claim 1, wherein the obtaining a plurality of reverberation features of a first target speech signal comprises:
determining an echo path of the first target speech signal;
removing power with a value of zero among power of an echo signal in the echo path to obtain the logarithmic power spectral density of the echo path; wherein the logarithmic power spectral density comprises Q frequency bands, and Q is a positive integer; and
obtaining a plurality of reverberation features based on logarithmic power in different frequency bands.

3. The method according to claim 2, wherein the plurality of reverberation features comprise a first power attenuation value, a second power attenuation value, and a mean power fitting slope; and
the first power attenuation value is a power attenuation value of the first N frequency bands in the Q frequency bands; the second power attenuation value is the power attenuation value of the L frequency bands after the (N-1)^{th} frequency band in the Q frequency bands; and the mean power fitting slope is obtained through fitting based on the mean logarithmic power spectral density of the logarithmic power spectral density.

4. The method according to claim 3, wherein the obtaining a plurality of reverberation features based on logarithmic power in different frequency bands comprises:
calculating at least one first difference frequency of every two adjacent frequency bands of the first N frequency bands of the Q frequency bands; wherein N is a positive integer and N<Q;
determining the first power attenuation value according to the first difference frequency;
calculating at least one second difference frequency of every two adjacent frequency bands of L frequency bands of the Q frequency bands; wherein the L frequency bands are L frequency bands after the (N-1)^{th} frequency band of the Q frequency bands, and L is a positive integer;
determining the second power attenuation value according to the second difference frequency;
processing the logarithmic power spectral density by an FIR filter to obtain a mean logarithmic power spectral density of the logarithmic power spectral density;
selecting a continuous power frequency band within a preset interval range in the mean logarithmic power spectral density; and
obtaining a mean power fitting slope through fitting according to the continuous power frequency band.

5. The method according to claim 3 or 4, wherein the determining a global reverberation time of the first target speech signal according to reverberation time estimates respectively corresponding to a plurality of reverberation features of the first target speech signal comprises:
in a case that a first reverberation time estimate is smaller than or equal to a first preset threshold, determining the first reverberation time estimate as the global reverberation time; wherein the first reverberation time estimate is a reverberation time estimate determined according to the first power attenuation value and the preset mapping relationship between the first power attenuation value and the reverberation time estimate;
in a case that both a second reverberation time estimate and a third reverberation time estimate are greater than or equal to a second preset threshold, determining the second reverberation time estimate as the global reverberation time; wherein the second reverberation time estimate is a reverberation time estimate determined according to the second power attenuation value and the preset mapping relationship between the second power attenuation value and the reverberation time estimate; and the third reverberation time estimate is a reverberation time estimate determined according to the mean power fitting slope and the preset mapping relationship between the mean power fitting slope and the reverberation time estimate; and
in a case that the first reverberation time estimate is greater than the first preset threshold and at least one of the second reverberation time estimate and the third reverberation time estimate is smaller than the second preset threshold, determining a mean value of the second reverberation time estimate and the third reverberation time estimate as the global reverberation time.

6. The method according to claim 1, wherein the length of the echo transfer function comprises a first length of the echo transfer function and a second length of the echo transfer function; and
the eliminating an echo of the first target speech signal according to the adjusted length of the echo transfer function comprises:
eliminating the echo of the first target speech signal according to the adjusted first length of the echo transfer function, to obtain a second target speech signal; and
eliminating an echo of the second target speech signal according to the adjusted second length of the echo transfer function.

7. An echo cancellation apparatus, comprising:
an obtaining module (410), configured to obtain a plurality of reverberation features of a first target speech signal, wherein the plurality of reverberation features are a plurality of signal features related to reverberation times;
a first determination module (420), configured to respectively determine, according to each reverberation feature of the first target speech signal and a preset mapping relationship between the reverberation feature and a reverberation time estimate, the reverberation time estimate corresponding to each reverberation feature of the first target speech signal; wherein the preset mapping relationship between each reverberation feature of the first target speech signal and the reverberation time estimate is a mapping relationship obtained based on a corresponding reverberation feature of a historical speech signal and a reverberation time corresponding to the reverberation feature; the preset mapping relationship between each reverberation feature and its corresponding reverberation time estimate is established based on linear regression method, with values of the reverberation feature as independent variable and values of the reverberation time estimate as dependent variable, and the preset mapping relationship is a slope of the reverberation feature and a intercept of the reverberation feature;
a second determination module (430), configured to determine a global reverberation time of the first target speech signal by performing a fusion estimation on reverberation time estimates respectively corresponding to a plurality of reverberation features of the first target speech signal;
an adjustment module (440), configured to adjust a length of an echo transfer function according to the global reverberation time; and
an elimination module (450), configured to eliminate an echo of the first target speech signal according to the adjusted length of the echo transfer function.

8. The apparatus according to claim 7, wherein the obtaining module (410) comprises:
a first determination unit, configured to determine an echo path of the first target speech signal;
a processing unit, configured to remove power with a value of zero among power of an echo signal in the echo path to obtain the logarithmic power spectral density of the echo path; wherein the logarithmic power spectral density comprises Q frequency bands, and Q is a positive integer; and
an obtaining unit, configured to obtain a plurality of reverberation features based on logarithmic power in different frequency bands.

9. The apparatus according to claim 8, wherein the plurality of reverberation features comprise a first power attenuation value, a second power attenuation value, and a mean power fitting slope; and
the first power attenuation value is a power attenuation value of the first N frequency bands in the Q frequency bands; the second power attenuation value is the power attenuation value of the L frequency bands after the (N-1)^{th} frequency band in the Q frequency bands; and the mean power fitting slope is obtained through fitting based on the mean logarithmic power spectral density of the logarithmic power spectral density.

10. The apparatus according to claim 9, wherein the obtaining unit comprises:
a first calculation subunit, configured to calculate at least one first difference frequency of every two adjacent frequency bands of the first N frequency bands of the Q frequency bands; wherein N is a positive integer and N<Q;
a first determination subunit, configured to determine a first power attenuation value according to the first difference frequency;
a second calculation subunit, configured to calculate at least one second difference frequency of every two adjacent frequency bands of L frequency bands of the Q frequency bands; wherein the L frequency bands are L frequency bands after the (N-1)^{th} frequency band of the Q frequency bands, and L is a positive integer;
a second determination subunit, configured to determine a second power attenuation value according to the second difference frequency;
a processing subunit, configured to process the logarithmic power spectral density by an FIR filter to obtain a mean logarithmic power spectral density of the logarithmic power spectral density;
a selection subunit, configured to select a continuous power frequency band within a preset interval range in the mean logarithmic power spectral density; and
a fitting subunit, configured to obtain a mean power fitting slope through fitting according to the continuous power frequency band.

11. The apparatus according to claim 9 or 10, wherein the second determination module (430) comprises:
a second determination unit, configured to: in a case that the first reverberation time estimate is smaller than or equal to a first preset threshold, determine the first reverberation time estimate as the global reverberation time; wherein the first reverberation time estimate is a reverberation time estimate determined according to the first power attenuation value and the preset mapping relationship between the first power attenuation value and the reverberation time estimate;
a third determination unit, configured to: in a case that both the second reverberation time estimate and the third reverberation time estimate are greater than or equal to a second preset threshold, determine the second reverberation time estimate as the global reverberation time; wherein the second reverberation time estimate is a reverberation time estimate determined according to the second power attenuation value and the preset mapping relationship between the second power attenuation value and the reverberation time estimate; and the third reverberation time estimate is a reverberation time estimate determined according to the mean power fitting slope and the preset mapping relationship between the mean power fitting slope and the reverberation time estimate; and
a fourth determination unit, configured to: in a case that the first reverberation time estimate is greater than the first preset threshold and at least one of the second reverberation time estimate and the third reverberation time estimate is smaller than the second preset threshold, determine a mean value of the second reverberation time estimate and the third reverberation time estimate as the global reverberation time.

12. The apparatus according to claim 7, wherein the length of the echo transfer function comprises a first length of the echo transfer function and a second length of the echo transfer function; and
the elimination module (450) comprises:
a first elimination unit, configured to eliminate the echo of the first target speech signal according to the adjusted first length of the echo transfer function, to obtain a second target speech signal; and
a second elimination unit, configured to eliminate an echo of the second target speech signal according to the adjusted second length of the echo transfer function.

13. An electronic device, comprising a processor (510), a memory (509), and a program or instruction stored on the memory (509) and executable on the processor (510), wherein when the program or instruction is executed by the processor (510), steps of the echo cancellation method according to any one of claims 1 to 6 are implemented.

14. A readable storage medium, storing a program or an instruction, wherein when the program or instruction is executed by a processor, steps of the echo cancellation method according to any one of claims 1 to 6 are implemented.

15. A chip, comprising a processor and a communication interface, the communication interface is coupled to the processor, and the processor is configured to run a program or an instruction, to perform the echo cancellation method according to any one of claims 1 to 6.

## Patentansprüche

1. Echounterdrückungsverfahren, umfassend:
Erhalten (S110) einer Mehrzahl von Nachhallmerkmalen eines ersten Zielsprachsignals, wobei die Mehrzahl von Nachhallmerkmalen eine Mehrzahl von Signalmerkmalen sind, die sich auf Nachhallzeiten beziehen;
jeweiliges Bestimmen (S120), gemäß jedem Nachhallmerkmal des ersten Zielsprachsignals und einer voreingestellten Zuordnungsbeziehung zwischen dem Nachhallmerkmal und einer Nachhallzeitschätzung, der Nachhallzeitschätzung, die jedem Nachhallmerkmal des ersten Zielsprachsignals entspricht; wobei die voreingestellte Zuordnungsbeziehung zwischen jedem Nachhallmerkmal des ersten Zielsprachsignals und der Nachhallzeitschätzung eine Zuordnungsbeziehung ist, die basierend auf einem entsprechenden Nachhallmerkmal eines historischen Sprachsignals und einer Nachhallzeit, die dem Nachhallmerkmal entspricht, erhalten wird; die voreingestellte Zuordnungsbeziehung zwischen jedem Nachhallmerkmal und seiner entsprechenden Nachhallzeitschätzung basierend auf einem linearen Regressionsverfahren mit Werten des Nachhallmerkmals als unabhängige Variable und Werten der Nachhallzeitschätzung als abhängige Variable erstellt wird, und die voreingestellte Zuordnungsbeziehung eine Steigung des Nachhallmerkmals und ein Schnittpunkt des Nachhallmerkmals ist;
Bestimmen (S130) einer globalen Nachhallzeit des ersten Zielsprachsignals durch Durchführen einer Fusionsschätzung an Nachhallzeitschätzungen, die jeweils einer Mehrzahl von Nachhallmerkmalen des ersten Zielsprachsignals entsprechen;
Anpassen (S140) einer Länge einer Echoübertragungsfunktion gemäß der globalen Nachhallzeit; und
Eliminieren (S150) eines Echos des ersten Zielsprachsignals gemäß der angepassten Länge der Echoübertragungsfunktion.

2. Verfahren nach Anspruch 1, wobei das Erhalten einer Mehrzahl von Nachhallmerkmalen eines ersten Zielsprachsignals umfasst:
Bestimmen eines Echopfads des ersten Zielsprachsignals;
Entfernen von Leistung mit einem Wert von Null aus der Leistung eines Echosignals in dem Echopfad, um die logarithmische Leistungsspektraldichte des Echopfads zu erhalten; wobei die logarithmische Leistungsspektraldichte Q Frequenzbänder aufweist und Q eine positive ganze Zahl ist; und
Erhalten einer Mehrzahl von Nachhallmerkmalen basierend auf logarithmischer Leistung in verschiedenen Frequenzbändern.

3. Verfahren nach Anspruch 2, wobei die Mehrzahl von Nachhallmerkmalen einen ersten Leistungsdämpfungswert, einen zweiten Leistungsdämpfungswert und eine mittlere Leistungsanpassungssteigung aufweist; und
der erste Leistungsdämpfungswert ein Leistungsdämpfungswert der ersten N Frequenzbänder in den Q Frequenzbändern ist; der zweite Leistungsdämpfungswert der Leistungsdämpfungswert der L Frequenzbänder nach dem (N-1)-ten Frequenzband in den Q Frequenzbändern ist; und die mittlere Leistungsanpassungssteigung durch Anpassen basierend auf der mittleren logarithmischen Leistungsspektraldichte der logarithmischen Leistungsspektraldichte erhalten wird.

4. Verfahren nach Anspruch 3, wobei das Erhalten einer Mehrzahl von Nachhallmerkmalen basierend auf logarithmischer Leistung in verschiedenen Frequenzbändern umfasst:
Berechnen mindestens einer ersten Differenzfrequenz von jeweils zwei benachbarten Frequenzbändern der ersten N Frequenzbänder der Q Frequenzbänder; wobei N eine positive ganze Zahl ist und N < Q;
Bestimmen des ersten Leistungsdämpfungswerts gemäß der ersten Differenzfrequenz;
Berechnen mindestens einer zweiten Differenzfrequenz von jeweils zwei benachbarten Frequenzbändern von L Frequenzbändern der Q Frequenzbänder; wobei die L Frequenzbänder L Frequenzbänder nach dem (N-1)-ten Frequenzband der Q Frequenzbänder sind und L eine positive ganze Zahl ist;
Bestimmen des zweiten Leistungsdämpfungswerts gemäß der zweiten Differenzfrequenz;
Verarbeiten der logarithmischen Leistungsspektraldichte durch ein FIR-Filter, um eine mittlere logarithmische Leistungsspektraldichte der logarithmischen Leistungsspektraldichte zu erhalten;
Auswählen eines kontinuierlichen Leistungsfrequenzbands innerhalb eines voreingestellten Intervallbereichs in der mittleren logarithmischen Leistungsspektraldichte; und
Erhalten einer mittleren Leistungsanpassungssteigung durch Anpassen gemäß dem kontinuierlichen Leistungsfrequenzband.

5. Verfahren nach Anspruch 3 oder 4, wobei das Bestimmen einer globalen Nachhallzeit des ersten Zielsprachsignals gemäß Nachhallzeitschätzungen, die jeweils einer Mehrzahl von Nachhallmerkmalen des ersten Zielsprachsignals entsprechen, umfasst:
für einen Fall, dass eine erste Nachhallzeitschätzung kleiner oder gleich einem ersten voreingestellten Schwellenwert ist, Bestimmen der ersten Nachhallzeitschätzung als die globale Nachhallzeit; wobei die erste Nachhallzeitschätzung eine Nachhallzeitschätzung ist, die gemäß dem ersten Leistungsdämpfungswert und der voreingestellten Zuordnungsbeziehung zwischen dem ersten Leistungsdämpfungswert und der Nachhallzeitschätzung bestimmt wird;
für einen Fall, dass sowohl eine zweite Nachhallzeitschätzung als auch eine dritte Nachhallzeitschätzung größer oder gleich einem zweiten voreingestellten Schwellenwert sind, Bestimmen der zweiten Nachhallzeitschätzung als die globale Nachhallzeit; wobei die zweite Nachhallzeitschätzung eine Nachhallzeitschätzung ist, die gemäß dem zweiten Leistungsdämpfungswert und der voreingestellten Zuordnungsbeziehung zwischen dem zweiten Leistungsdämpfungswert und der Nachhallzeitschätzung bestimmt wird; und die dritte Nachhallzeitschätzung eine Nachhallzeitschätzung ist, die gemäß der mittleren Leistungsanpassungssteigung und der voreingestellten Zuordnungsbeziehung zwischen der mittleren Leistungsanpassungssteigung und der Nachhallzeitschätzung bestimmt wird; und
für einen Fall, dass die erste Nachhallzeitschätzung größer als der erste voreingestellte Schwellenwert ist und mindestens eine der zweiten Nachhallzeitschätzung und der dritten Nachhallzeitschätzung kleiner als der zweite voreingestellte Schwellenwert ist, Bestimmen eines Mittelwerts der zweiten Nachhallzeitschätzung und der dritten Nachhallzeitschätzung als die globale Nachhallzeit.

6. Verfahren nach Anspruch 1, wobei die Länge der Echoübertragungsfunktion eine erste Länge der Echoübertragungsfunktion und eine zweite Länge der Echoübertragungsfunktion aufweist; und
das Eliminieren eines Echos des ersten Zielsprachsignals gemäß der angepassten Länge der Echoübertragungsfunktion umfasst:
Eliminieren des Echos des ersten Zielsprachsignals gemäß der angepassten ersten Länge der Echoübertragungsfunktion, um ein zweites Zielsprachsignal zu erhalten; und
Eliminieren eines Echos des zweiten Zielsprachsignals gemäß der angepassten zweiten Länge der Echoübertragungsfunktion.

7. Echounterdrückungsvorrichtung, aufweisend:
ein Erhaltemodul (410), das eingerichtet ist, eine Mehrzahl von Nachhallmerkmalen eines ersten Zielsprachsignals zu erhalten, wobei die Mehrzahl von Nachhallmerkmalen eine Mehrzahl von Signalmerkmalen sind, die sich auf Nachhallzeiten beziehen;
ein erstes Bestimmungsmodul (420), das eingerichtet ist, gemäß jedem Nachhallmerkmal des ersten Zielsprachsignals und einer voreingestellten Zuordnungsbeziehung zwischen dem Nachhallmerkmal und einer Nachhallzeitschätzung jeweils die Nachhallzeitschätzung zu bestimmen, die jedem Nachhallmerkmal des ersten Zielsprachsignals entspricht; wobei die voreingestellte Zuordnungsbeziehung zwischen jedem Nachhallmerkmal des ersten Zielsprachsignals und der Nachhallzeitschätzung eine Zuordnungsbeziehung ist, die basierend auf einem entsprechenden Nachhallmerkmal eines historischen Sprachsignals und einer Nachhallzeit, die dem Nachhallmerkmal entspricht, erhalten wird; die voreingestellte Zuordnungsbeziehung zwischen jedem Nachhallmerkmal und seiner entsprechenden Nachhallzeitschätzung basierend auf einem linearen Regressionsverfahren mit Werten des Nachhallmerkmals als unabhängige Variable und Werten der Nachhallzeitschätzung als abhängige Variable erstellt wird, und die voreingestellte Zuordnungsbeziehung eine Steigung des Nachhallmerkmals und ein Schnittpunkt des Nachhallmerkmals ist;
ein zweites Bestimmungsmodul (430), das eingerichtet ist, eine globale Nachhallzeit des ersten Zielsprachsignals durch Durchführen einer Fusionsschätzung an Nachhallzeitschätzungen zu bestimmen, die jeweils einer Mehrzahl von Nachhallmerkmalen des ersten Zielsprachsignals entsprechen;
ein Anpassungsmodul (440), das eingerichtet ist, eine Länge einer Echoübertragungsfunktion gemäß der globalen Nachhallzeit anzupassen; und
ein Eliminierungsmodul (450), das eingerichtet ist, ein Echo des ersten Zielsprachsignals gemäß der angepassten Länge der Echoübertragungsfunktion zu eliminieren.

8. Vorrichtung nach Anspruch 7, wobei das Erhaltemodul (410) aufweist:
eine erste Bestimmungseinheit, die eingerichtet ist, einen Echopfad des ersten Zielsprachsignals zu bestimmen;
eine Verarbeitungseinheit, die eingerichtet ist, Leistung mit einem Wert von Null aus der Leistung eines Echosignals in dem Echopfad zu entfernen, um die logarithmische Leistungsspektraldichte des Echopfads zu erhalten; wobei die logarithmische Leistungsspektraldichte Q Frequenzbänder aufweist und Q eine positive ganze Zahl ist; und
eine Erhalteeinheit, die eingerichtet ist, eine Mehrzahl von Nachhallmerkmalen basierend auf logarithmischer Leistung in verschiedenen Frequenzbändern zu erhalten.

9. Vorrichtung nach Anspruch 8, wobei die Mehrzahl von Nachhallmerkmalen einen ersten Leistungsdämpfungswert, einen zweiten Leistungsdämpfungswert und eine mittlere Leistungsanpassungssteigung aufweist; und
der erste Leistungsdämpfungswert ein Leistungsdämpfungswert der ersten N Frequenzbänder in den Q Frequenzbändern ist; der zweite Leistungsdämpfungswert der Leistungsdämpfungswert der L Frequenzbänder nach dem (N-1)-ten Frequenzband in den Q Frequenzbändern ist; und die mittlere Leistungsanpassungssteigung durch Anpassen basierend auf der mittleren logarithmischen Leistungsspektraldichte der logarithmischen Leistungsspektraldichte erhalten wird.

10. Vorrichtung nach Anspruch 9, wobei die Erhalteeinheit aufweist:
eine erste Berechnungsuntereinheit, die eingerichtet ist, mindestens eine erste Differenzfrequenz von jeweils zwei benachbarten Frequenzbändern der ersten N Frequenzbänder der Q Frequenzbänder zu berechnen; wobei N eine positive ganze Zahl ist und N < Q;
eine erste Bestimmungsuntereinheit, die eingerichtet ist, einen ersten Leistungsdämpfungswert gemäß der ersten Differenzfrequenz zu bestimmen;
eine zweite Berechnungsuntereinheit, die eingerichtet ist, mindestens eine zweite Differenzfrequenz von jeweils zwei benachbarten Frequenzbändern von L Frequenzbändern der Q Frequenzbänder zu berechnen; wobei die L Frequenzbänder L Frequenzbänder nach dem (N-1)-ten Frequenzband der Q Frequenzbänder sind und L eine positive ganze Zahl ist;
eine zweite Bestimmungsuntereinheit, die eingerichtet ist, einen zweiten Leistungsdämpfungswert gemäß der zweiten Differenzfrequenz zu bestimmen;
eine Verarbeitungsuntereinheit, die eingerichtet ist, die logarithmische Leistungsspektraldichte durch ein FIR-Filter zu verarbeiten, um eine mittlere logarithmische Leistungsspektraldichte der logarithmischen Leistungsspektraldichte zu erhalten;
eine Auswahluntereinheit, die eingerichtet ist, ein kontinuierliches Leistungsfrequenzband innerhalb eines voreingestellten Intervallbereichs in der mittleren logarithmischen Leistungsspektraldichte auszuwählen; und
eine Anpassungsuntereinheit, die eingerichtet ist, eine mittlere Leistungsanpassungssteigung durch Anpassen gemäß dem kontinuierlichen Leistungsfrequenzband zu erhalten.

11. Vorrichtung nach Anspruch 9 oder 10, wobei das zweite Bestimmungsmodul (430) aufweist:
eine zweite Bestimmungseinheit, die eingerichtet ist: für einen Fall, dass die erste Nachhallzeitschätzung kleiner oder gleich einem ersten voreingestellten Schwellenwert ist, die erste Nachhallzeitschätzung als die globale Nachhallzeit zu bestimmen; wobei die erste Nachhallzeitschätzung eine Nachhallzeitschätzung ist, die gemäß dem ersten Leistungsdämpfungswert und der voreingestellten Zuordnungsbeziehung zwischen dem ersten Leistungsdämpfungswert und der Nachhallzeitschätzung bestimmt wird;
eine dritte Bestimmungseinheit, die eingerichtet ist: für einen Fall, dass sowohl die zweite Nachhallzeitschätzung als auch die dritte Nachhallzeitschätzung größer oder gleich einem zweiten voreingestellten Schwellenwert sind, die zweite Nachhallzeitschätzung als die globale Nachhallzeit zu bestimmen; wobei die zweite Nachhallzeitschätzung eine Nachhallzeitschätzung ist, die gemäß dem zweiten Leistungsdämpfungswert und der voreingestellten Zuordnungsbeziehung zwischen dem zweiten Leistungsdämpfungswert und der Nachhallzeitschätzung bestimmt wird; und die dritte Nachhallzeitschätzung eine voreingestellten Zuordnungsbeziehung zwischen der mittleren Leistungsanpassungssteigung und der Nachhallzeitschätzung bestimmt wird; und
eine vierte Bestimmungseinheit, die eingerichtet ist: für einen Fall, dass die erste Nachhallzeitschätzung größer als der erste voreingestellte Schwellenwert ist und mindestens eine der zweiten Nachhallzeitschätzung und der dritten Nachhallzeitschätzung kleiner als der zweite voreingestellte Schwellenwert ist, einen Mittelwert der zweiten Nachhallzeitschätzung und der dritten Nachhallzeitschätzung als die globale Nachhallzeit zu bestimmen.

12. Vorrichtung nach Anspruch 7, wobei die Länge der Echoübertragungsfunktion eine erste Länge der Echoübertragungsfunktion und eine zweite Länge der Echoübertragungsfunktion aufweist; und
das Eliminierungsmodul (450) aufweist:
eine erste Eliminierungseinheit, die eingerichtet ist, das Echo des ersten Zielsprachsignals gemäß der angepassten ersten Länge der Echoübertragungsfunktion zu eliminieren, um ein zweites Zielsprachsignal zu erhalten; und
eine zweite Eliminierungseinheit, die eingerichtet ist, ein Echo des zweiten Zielsprachsignals gemäß der angepassten zweiten Länge der Echoübertragungsfunktion zu eliminieren.

13. Elektronische Vorrichtung, mit einem Prozessor (510), einem Speicher (509) und einem Programm oder einer Anweisung, das/die auf dem Speicher (509) gespeichert ist und auf dem Prozessor (510) ausführbar ist, wobei, wenn das Programm oder die Anweisung durch den Prozessor (510) ausgeführt wird, Schritte des Echounterdrückungsverfahrens nach einem der Ansprüche 1 bis 6 implementiert werden.

14. Lesbares Speichermedium, das ein Programm oder eine Anweisung speichert, wobei, wenn das Programm oder die Anweisung durch einen Prozessor ausgeführt wird, Schritte des Echounterdrückungsverfahrens nach einem der Ansprüche 1 bis 6 implementiert werden.

15. Chip, mit einem Prozessor und einer Kommunikationsschnittstelle, wobei die Kommunikationsschnittstelle mit dem Prozessor gekoppelt ist und der Prozessor eingerichtet ist, ein Programm oder eine Anweisung auszuführen, um das Echounterdrückungsverfahren nach einem der Ansprüche 1 bis 6 durchzuführen.

## Revendications

1. Procédé d'annulation d'écho, comprenant :
l'obtention (S110) d'une pluralité de caractéristiques de réverbération d'un premier signal vocal cible, dans lequel la pluralité de caractéristiques de réverbération est une pluralité de caractéristiques de signal liées à des temps de réverbération ;
respectivement la détermination (S120), selon chaque caractéristique de réverbération du premier signal vocal cible et une relation de correspondance prédéfinie entre la caractéristique de réverbération et une estimation de temps de réverbération, l'estimation de temps de réverbération correspondant à chaque caractéristique de réverbération du premier signal vocal cible ; dans lequel la relation de correspondance prédéfinie entre chaque caractéristique de réverbération du premier signal vocal cible et l'estimation de temps de réverbération est une relation de correspondance obtenue sur la base d'une caractéristique de réverbération correspondante d'un signal vocal historique et d'un temps de réverbération correspondant à la caractéristique de réverbération ; la relation de correspondance prédéfinie entre chaque caractéristique de réverbération et son estimation de temps de réverbération correspondante est établie sur la base d'une méthode de régression linéaire, avec des valeurs de la caractéristique de réverbération comme variable indépendante et des valeurs de l'estimation de temps de réverbération comme variable dépendante, et la relation de correspondance prédéfinie est une pente de la caractéristique de réverbération et un point d'intersection de la caractéristique de réverbération ;
la détermination (S130) d'un temps de réverbération global du premier signal vocal cible en effectuant une estimation de fusion sur des estimations de temps de réverbération correspondant respectivement à une pluralité de caractéristiques de réverbération du premier signal vocal cible ;
l'ajustement (S140) de la longueur d'une fonction de transfert d'écho selon le temps de réverbération global ; et
l'élimination (S150) d'un écho du premier signal vocal cible selon la longueur ajustée de la fonction de transfert d'écho.

2. Procédé selon la revendication 1, dans lequel l'obtention d'une pluralité de caractéristiques de réverbération d'un premier signal vocal cible comprend :
la détermination d'un trajet d'écho du premier signal vocal cible ;
la suppression de la puissance avec une valeur nulle parmi la puissance d'un signal d'écho dans le trajet d'écho pour obtenir la densité spectrale de puissance logarithmique du trajet d'écho ; dans lequel la densité spectrale de puissance logarithmique comprend Q bandes de fréquence, et Q est un entier positif ; et
l'obtention d'une pluralité de caractéristiques de réverbération sur la base de la puissance logarithmique dans différentes bandes de fréquence.

3. Procédé selon la revendication 2, dans lequel la pluralité de caractéristiques de réverbération comprend une première valeur d'atténuation de puissance, une seconde valeur d'atténuation de puissance et une pente d'ajustement de puissance moyenne ; et
la première valeur d'atténuation de puissance est une valeur d'atténuation de puissance des N premières bandes de fréquence dans les Q bandes de fréquence ; la seconde valeur d'atténuation de puissance est la valeur d'atténuation de puissance des L bandes de fréquence après la (N - 1)^{ième} bande de fréquence dans les Q bandes de fréquence ; et la pente d'ajustement de puissance moyenne est obtenue par ajustement sur la base de la densité spectrale de puissance logarithmique moyenne de la densité spectrale de puissance logarithmique.

4. Procédé selon la revendication 3, dans lequel l'obtention d'une pluralité de caractéristiques de réverbération sur la base de la puissance logarithmique dans différentes bandes de fréquence comprend :
le calcul d'au moins une première fréquence de différence pour chaque paire de bandes de fréquence adjacentes des N premières bandes de fréquence dans les Q bandes de fréquence ; dans lequel N est un entier positif et N<Q ;
la détermination de la première valeur d'atténuation de puissance selon la première fréquence de différence ;
le calcul d'au moins une seconde fréquence de différence de chaque paire de bandes de fréquence adjacentes des L bandes de fréquence des Q bandes de fréquence ; dans lequel les L bandes de fréquence sont des L bandes de fréquence après la (N - 1)^{ième} bande de fréquence des Q bandes de fréquence, et L est un entier positif ;
la détermination de la seconde valeur d'atténuation de puissance selon la seconde fréquence de différence ;
le traitement de la densité spectrale de puissance logarithmique par un filtre FIR pour obtenir une densité spectrale de puissance logarithmique moyenne de la densité spectrale de puissance logarithmique ;
la sélection d'une bande de fréquence de puissance continue dans une plage d'intervalles prédéfinie de la densité spectrale de puissance logarithmique moyenne ; et
l'obtention d'une pente d'ajustement de puissance moyenne par ajustement selon la bande de fréquence de puissance continue.

5. Procédé selon la revendication 3 ou 4, dans lequel la détermination d'un temps de réverbération global du premier signal vocal cible, selon des estimations de temps de réverbération correspondant respectivement à une pluralité de caractéristiques de réverbération du premier signal vocal cible, comprend :
dans le cas dans lequel une première estimation de temps de réverbération est inférieure ou égale à un premier seuil prédéfini, la détermination de la première estimation de temps de réverbération comme étant le temps de réverbération global ; dans lequel la première estimation de temps de réverbération est une estimation de temps de réverbération déterminée selon la première valeur d'atténuation de puissance et la relation de correspondance prédéfinie entre la première valeur d'atténuation de puissance et l'estimation de temps de réverbération ;
dans le cas dans lequel une deuxième estimation de temps de réverbération et une troisième estimation de temps de réverbération sont toutes deux supérieures ou égales à un second seuil prédéfini, la deuxième estimation de temps de réverbération est déterminée comme étant le temps de réverbération global ; dans lequel la deuxième estimation de temps de réverbération est une estimation de temps de réverbération déterminée selon la seconde valeur d'atténuation de puissance et la relation de correspondance prédéfinie entre la seconde valeur d'atténuation de puissance et l'estimation de temps de réverbération ; et la troisième estimation de temps de réverbération est une estimation de temps de réverbération déterminée selon la pente d'ajustement de puissance moyenne et la relation de correspondance prédéfinie entre la pente d'ajustement de puissance moyenne et l'estimation de temps de réverbération ; et
dans le cas dans lequel la première estimation de temps de réverbération est supérieure au premier seuil prédéfini et au moins une de la deuxième estimation de temps de réverbération et de la troisième estimation de temps de réverbération est inférieure au second seuil prédéfini, la détermination d'une valeur moyenne de la deuxième estimation de temps de réverbération et de la troisième estimation de temps de réverbération comme étant le temps de réverbération global.

6. Procédé selon la revendication 1, dans lequel la longueur de la fonction de transfert d'écho comprend une première longueur de la fonction de transfert d'écho et une seconde longueur de la fonction de transfert d'écho ; et
l'élimination d'un écho du premier signal vocal cible selon la longueur ajustée de la fonction de transfert d'écho comprend :
l'élimination de l'écho du premier signal vocal cible selon la première longueur ajustée de la fonction de transfert d'écho, pour obtenir un second signal vocal cible ; et
l'élimination d'un écho du second signal vocal cible selon la seconde longueur ajustée de la fonction de transfert d'écho.

7. Appareil d'annulation d'écho, comprenant :
un module d'acquisition (410), configuré pour obtenir une pluralité de caractéristiques de réverbération d'un premier signal vocal cible, dans lequel la pluralité de caractéristiques de réverbération est une pluralité de caractéristiques de signal liées à des temps de réverbération ;
un premier module de détermination (420), configuré pour déterminer respectivement, selon chaque caractéristique de réverbération du premier signal vocal cible et une relation de correspondance prédéfinie entre la caractéristique de réverbération et une estimation de temps de réverbération, l'estimation de temps de réverbération correspondant à chaque caractéristique de réverbération du premier signal vocal cible ; dans lequel la relation de correspondance prédéfinie entre chaque caractéristique de réverbération du premier signal vocal cible et l'estimation de temps de réverbération est une relation de correspondance obtenue sur la base d'une caractéristique de réverbération correspondante d'un signal vocal historique et d'un temps de réverbération correspondant à la caractéristique de réverbération ; la relation de correspondance prédéfinie entre chaque caractéristique de réverbération et son estimation de temps de réverbération correspondante est établie sur la base d'une méthode de régression linéaire, avec des valeurs de la caractéristique de réverbération comme variable indépendante et des valeurs de l'estimation de temps de réverbération comme variable dépendante, et la relation de correspondance prédéfinie est une pente de la caractéristique de réverbération et un point d'intersection de la caractéristique de réverbération ;
un second module de détermination (430), configuré pour déterminer un temps de réverbération global du premier signal vocal cible en effectuant une estimation de fusion sur des estimations de temps de réverbération correspondant respectivement à une pluralité de caractéristiques de réverbération du premier signal vocal cible ;
un module d'ajustement (440), configuré pour ajuster la longueur d'une fonction de transfert d'écho selon le temps de réverbération global ; et
un module d'élimination (450), configuré pour éliminer un écho du premier signal vocal cible selon la longueur ajustée de la fonction de transfert d'écho.

8. Appareil selon la revendication 7, dans lequel le module d'obtention (410) comprend :
une première unité de détermination, configurée pour déterminer un trajet d'écho du premier signal vocal cible ;
une unité de traitement, configurée pour supprimer de la puissance avec une valeur nulle parmi la puissance d'un signal d'écho dans le trajet d'écho pour obtenir la densité spectrale de puissance logarithmique du trajet d'écho ; dans lequel la densité spectrale de puissance logarithmique comprend Q bandes de fréquence, et Q est un entier positif ; et
une unité d'obtention, configurée pour obtenir une pluralité de caractéristiques de réverbération sur la base de la puissance logarithmique dans différentes bandes de fréquence.

9. Appareil selon la revendication 8, dans lequel la pluralité de caractéristiques de réverbération comprend une première valeur d'atténuation de puissance, une seconde valeur d'atténuation de puissance et une pente d'ajustement de puissance moyenne ; et
la première valeur d'atténuation de puissance est une valeur d'atténuation de puissance des N premières bandes de fréquence dans les Q bandes de fréquence ; la seconde valeur d'atténuation de puissance est la valeur d'atténuation de puissance des L bandes de fréquence après la (N - 1)^{ième} bande de fréquence dans les Q bandes de fréquence ; et la pente d'ajustement de puissance moyenne est obtenue par ajustement sur la base de la densité spectrale de puissance logarithmique moyenne de la densité spectrale de puissance logarithmique.

10. Appareil selon la revendication 9, dans lequel l'unité d'obtention comprend :
une première sous-unité de calcul, configurée pour calculer au moins une première fréquence de différence pour chaque paire de bandes de fréquence adjacentes des N premières bandes de fréquence parmi les Q bandes de fréquence ; dans lequel N est un entier positif et N<Q ;
une première sous-unité de détermination, configurée pour déterminer une première valeur d'atténuation de puissance selon la première fréquence de différence ;
une seconde sous-unité de calcul, configurée pour calculer au moins une seconde fréquence de différence de chaque paire de bandes de fréquence adjacentes de L bandes de fréquence des Q bandes de fréquence ; dans lequel les L bandes de fréquence sont des L bandes de fréquence après la (N - 1)^{ième} bande de fréquence des Q bandes de fréquence, et L est un entier positif ;
une seconde sous-unité de détermination, configurée pour déterminer une seconde valeur d'atténuation de puissance selon la seconde fréquence de différence ;
une sous-unité de traitement, configurée pour traiter la densité spectrale de puissance logarithmique par un filtre FIR pour obtenir une densité spectrale de puissance logarithmique moyenne de la densité spectrale de puissance logarithmique ;
une sous-unité de sélection, configurée pour sélectionner une bande de fréquence de puissance continue dans une plage d'intervalles prédéfinie de la densité spectrale de puissance logarithmique moyenne ; et
une sous-unité d'ajustement, configurée pour obtenir une pente d'ajustement de puissance moyenne par ajustement selon la bande de fréquence de puissance continue.

11. Appareil selon la revendication 9 ou 10, dans lequel le second module de détermination (430) comprend :
une deuxième unité de détermination, configurée pour : dans le cas dans lequel la première estimation de temps de réverbération est inférieure ou égale à un premier seuil prédéfini, déterminer la première estimation de temps de réverbération comme étant le temps de réverbération global ; dans lequel la première estimation de temps de réverbération est une estimation de temps de réverbération déterminée selon la première valeur d'atténuation de puissance et la relation de correspondance prédéfinie entre la première valeur d'atténuation de puissance et l'estimation de temps de réverbération ;
une troisième unité de détermination, configurée pour : dans le cas dans lequel la deuxième estimation de temps de réverbération et la troisième estimation de temps de réverbération sont toutes deux supérieures ou égales à un second seuil prédéfini, déterminer la deuxième estimation de temps de réverbération comme étant le temps de réverbération global ; dans lequel la deuxième estimation de temps de réverbération est une estimation de temps de réverbération déterminée selon la seconde valeur d'atténuation de puissance et la relation de correspondance prédéfinie entre la seconde valeur d'atténuation de puissance et l'estimation de temps de réverbération ; et la troisième estimation de temps de réverbération est une estimation de temps de réverbération déterminée selon la pente d'ajustement de puissance moyenne et la relation de correspondance prédéfinie entre la pente d'ajustement de puissance moyenne et l'estimation de temps de réverbération ; et
une quatrième unité de détermination, configurée pour : dans le cas dans lequel la première estimation de temps de réverbération est supérieure au premier seuil prédéfini et au moins une de la deuxième estimation de temps de réverbération et de la troisième estimation de temps de réverbération est inférieure au second seuil prédéfini, déterminer une valeur moyenne de la deuxième estimation de temps de réverbération et de la troisième estimation de temps de réverbération comme étant le temps de réverbération global.

12. Appareil selon la revendication 7, dans lequel la longueur de la fonction de transfert d'écho comprend une première longueur de la fonction de transfert d'écho et une seconde longueur de la fonction de transfert d'écho ; et
le module d'élimination (450) comprend :
une première unité d'élimination, configurée pour éliminer l'écho du premier signal vocal cible selon la première longueur ajustée de la fonction de transfert d'écho, pour obtenir un second signal vocal cible ; et
une seconde unité d'élimination, configurée pour éliminer un écho du second signal vocal cible selon la seconde longueur ajustée de la fonction de transfert d'écho.

13. Dispositif électronique, comprenant un processeur (510), une mémoire (509) et un programme ou une instruction stocké dans la mémoire (509) et pouvant être exécuté(e) sur le processeur (510), dans lequel, lorsque le programme ou l'instruction est exécuté(e) par le processeur (510), des étapes du procédé d'annulation d'écho selon l'une quelconque des revendications 1 à 6 sont mises en œuvre.

14. Support de stockage lisible, stockant un programme ou une instruction, dans lequel, lorsque le programme ou l'instruction est exécuté(e) par un processeur, des étapes du procédé d'annulation d'écho selon l'une quelconque des revendications 1 à 6 sont mises en œuvre.

15. Puce comprenant un processeur et une interface de communication, l'interface de communication est couplée au processeur, et le processeur est configuré pour exécuter un programme ou une instruction, pour réaliser le procédé d'annulation d'écho selon l'une quelconque des revendications 1 à 6.
